# EUROPEAN PATENT APPLICATION

(11) **EP 2 665 266 A1**
(43) Date of publication of application: **20.11.2013**
(21) Application number: 12734754.0
(22) Date of filing: 16.01.2012
(51) Int. Cl.: H04N 7/26, H04N 7/32

(54) **PREDICTION METHOD AND PREDICTOR FOR ENCODING AND DECODING**

(30) Priority: 14.01.2011 CN 201110007743
(71) Applicant: Huawei Technologies Co., Ltd., Shenzhen, Guangdong 518129 (CN)
(72) Inventor: LIN, Yongbing, Shenzhen Guangdong 518129 (CN); LAI, Changcai, Shenzhen Guangdong 518129 (CN)
(74) Representative: Kreuz, Georg Maria
(86) International application number: PCT/CN2012/070391
(87) International publication number: WO 2012/095035

(57) **Abstract**

The present invention provides a prediction method in an image block encoding or decoding, including: obtaining availability information about reference blocks of a current image block, and determining whether the reference blocks are available according to the availability information, where the reference blocks of the current image block include a left side block, an upper side block, and an upper left block of the current image block; if at least one of the reference blocks is available, and at least one is unavailable, filling a pixel value in the available reference block to the unavailable reference block as a reference pixel value of the current image block; and predicting the current image block according to the reference pixel value.

## Description

### FIELD OF THE INVENTION

The present invention relates to video encoding or decoding technologies, and in particular to a pixel prediction method in a encoding or decoding.

### BACKGROUND OF THE INVENTION

The basic principle for video code compression is to eliminate redundancy as much as possible by using relevance between space domain, time domain, and code word. Currently, a popular method is to use a block-based mixed video coding framework to implement video code compression through steps such as prediction, change, quantization, and entropy encoding. Such a coding framework shows strong vitality. Standards from the earliest MPEG-1 to the latest video coding standard H.264/AVC, and even the next-generation video coding compression standard HEVC under formulation by the JCTVC workgroup (a joint workgroup founded by MPEG and VECG) all use such a block-based mixed video coding framework.

In a video encoding or decoding, the block-based space-domain prediction encoding technology is generally used, and the basic principle is to eliminate space-domain redundancy by using relevance between neighboring blocks. That is, neighboring blocks are used as reference blocks to predict a current block. Currently, the raster-scan method is commonly used in video image encoding. Generally, the processing starts from the upper left corner of an image or slice, and proceeds according to a sequence from top down and from left to right. Reference blocks of a current block mainly include a left side block, an upper side block, and an upper left block.

Apparently, during the space-domain prediction for border blocks, the problem of how to handle unavailable reference blocks will be inevitably involved, that is, the problem of how to obtain corresponding reference pixels when neighboring blocks are unavailable. Generally speaking, the so-called "unavailable" generally includes the following cases:

In a first case, reference blocks actually do not exist. Currently, the size unit for an encoding image is specified as 64×64. If a current image does not meet this dimension specification, corresponding parts need to be supplemented at borders of the image to zoom in the dimension of the image to the 64×64 specification. At this time, image blocks originally located at the borders of the image will have neighboring blocks (reference blocks) that "should not exist". If the pixel value of the current image block is predicted according to these neighboring blocks that "should not exist", an extremely large error will apparently occur.

In a second case, reference blocks exist, but the reference blocks and current image block are in different slices (slice). For example, for a current block located at the border of a slice, its neighboring blocks may be located in other slices. In this case, the neighboring blocks and the current image block cannot be referenced mutually.

In a third case, the neighboring blocks are not processed (decoded or restructured) yet, and cannot serve as reference blocks.

If any one of the left side block, upper side block, and upper left block meets the preceding unavailable cases, the solution in the prior art is to directly allocate an invariable reference pixel value for pixel points of the reference blocks, for example, 128, and current blocks are predicted according to the invariable value. Apparently, allocating an invariable value for an unavailable reference block conflicts with the changing nature of image block pixels, and the prediction result can hardly meet actual requirements.

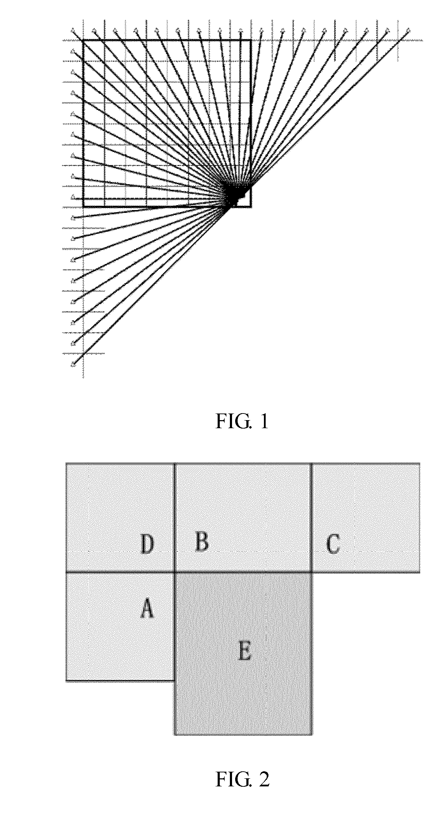

As shown in FIG. 1, a UDI prediction technology is further proposed in the prior art. In image prediction, one direction will be selected among 33 prediction directions. Prediction for all pixel points in a current image block is performed based on reference blocks pointed to by the prediction direction, greatly improving prediction flexibility. However, the 33 prediction directions also make the prediction procedure possibly face a large number of "unavailable" reference blocks. If all of them are filled with invariable values, the accuracy of prediction will be greatly affected.

### SUMMARY OF THE INVENTION

The present invention provides a prediction method in an image block encoding or decoding, including: obtaining availability information about reference blocks of a current image block, and determining whether the reference blocks are available according to the availability information, where the reference blocks of the current image block include a left side block, an upper side block, and an upper left block of the current image block; if at least one of the reference blocks is available, and at least one is unavailable, filling a pixel value in the available reference block to the unavailable reference block as a reference pixel value of the current image block; and predicting the current image block according to the reference pixel value.

The present invention further accordingly provides a predictor that uses the prediction method, including: an availability determining module, configured to obtain availability information about reference blocks of a current image block, and determine whether the reference blocks are available according to the availability information, where the reference blocks of the current image block include a left side block, an upper side block, and an upper left block of the current image block; a pixel value filling module, configured to: if at least one of the reference blocks is available, and at least one is unavailable, fill a pixel value in the available reference block to the unavailable reference block as a reference pixel value of the current image block; and a predicting module, configured to predict the current image block according to the reference pixel value.

The present invention further provides a prediction method, including: obtaining a prediction direction; if the prediction direction points to an upper right block of the current image block, the upper right block is unavailable, and the left side block of the current image block is available, filling a pixel value of the left side block of the current image block to a lower side block of the current image block, and obtaining a pixel value of the lower side block pointed to by the prediction direction in reverse extension after filling; and predicting a pixel value of the current image block according to the pixel value of the lower side block pointed to by the prediction direction in reverse extension after filling and the prediction direction.

The present invention further accordingly provides a predictor that uses the prediction method, including: a prediction direction obtaining module, configured to obtain a prediction direction;
a pixel value filling module, configured to: when the prediction direction points to an upper right block of a current image block, the upper right block is unavailable, and a left side block of the current image block is available, fill a pixel value of the left side block of the current image block to a lower side block of the current image block, and obtain a pixel value of the lower side block pointed to by the prediction direction in reverse extension after filling; and
a predicting module, configured to predict a pixel value of the current image block according to the pixel value of the lower side block pointed to by the prediction direction in reverse extension after filling and the prediction direction.

According to the prediction method and predictor provided in the present invention, unavailable pixel blocks are filled by using pixel values of available reference blocks, so that pixel prediction may always be performed based on the pixel values of the reference blocks that are adjacent to the current block, improving the accuracy of the prediction.

### BRIEF DESCRIPTION OF THE DRAWINGS

To illustrate the technical solutions in the embodiments of the present invention more clearly, the following briefly describes the accompanying drawings required for describing the embodiments of the present invention. Apparently, the accompanying drawings in the following description merely are some embodiments of the present invention, and persons of ordinary skill in the art can derive other drawings from these accompanying drawings without creative efforts.

FIG. 1 is an application diagram of a UDI prediction method provided by the H.264 standard;

FIG. 2 is a schematic diagram of arranging image blocks in image prediction;

FIG. 3 is a schematic diagram of a prediction method according to an embodiment of the present invention;

FIG. 4 is an application diagram of a prediction method according to an embodiment of the present invention;

FIG. 5 is a schematic diagram of a prediction method according to another embodiment of the present invention;

FIG. 6 is an application diagram of a prediction method according to another embodiment of the present invention;

FIG. 7 is a schematic diagram of a predictor according to an embodiment of the present invention; and

FIG. 8 is a schematic diagram of a predictor according to another embodiment of the present invention.

### DETAILED DESCRIPTION OF THE EMBODIMENTS

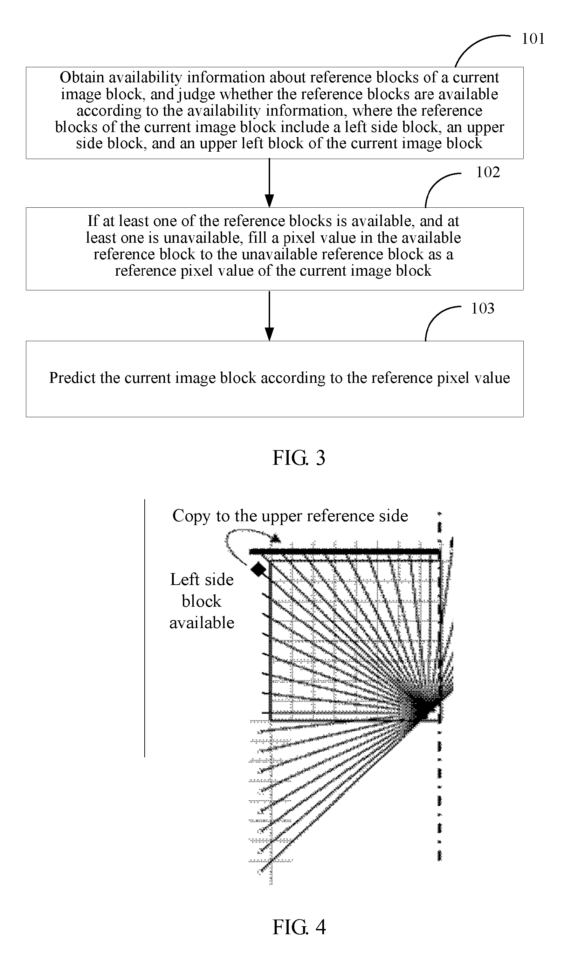

FIG. 2 is a schematic diagram of arranging image blocks. Block E is a current image block, block A is a left side block of the current image block, block B is an upper block of the current image block, block D is an upper left block of the current image block, and block C is an upper right block of the current image block. The prediction method provided in this embodiment provides a solution when any one reference block among the blocks A, B, and D is unavailable. As shown in FIG. 3, the prediction method according to this embodiment includes:

Step 101: Obtain availability information about reference blocks of a current image block, and determine whether the reference blocks are available according to the availability information, where the reference blocks of the current image block include a left side block, an upper side block, and an upper left block of the current image block.

In this embodiment, the availability information includes: whether a reference block is located inside a border of an image where the current image block is located; whether the reference block is located in a same slice with the current image block; and whether the reference block has already been encoded or decoded. If the reference block meets the three conditions, the reference block is available; otherwise, the reference block is unavailable. From another aspect, whether a reference block is located inside a border of an image where the current image block is located means to determine whether the reference block is an additionally supplemented image block that is located at the border of the image. The image specification for a encoding or decoding is 64×64. An image may fail to meet this specification requirement. In this case, certain virtual image blocks that do not exist will exist outside the border of the image. Apparently, these image blocks that do not exist cannot be used to predict a pixel value of the current image block.

Step 102: If at least one of the reference blocks is available, and at least one is unavailable, fill a pixel value in the available reference block to the unavailable reference block as a reference pixel value of the current image block.

Step 103: Predict the current image block according to the reference pixel value.

For example, reference may be made to FIG. 4. When the left side block is available, but the upper side block is unavailable, the pixel value of the left side block as a reference block is filled to the upper side block. When the upper side block is available, but the left side block is unavailable, execution is performed accordingly.

According to the prediction method provided in this embodiment, when any one of the left side block, upper side block, and upper left block of the current image block is unavailable, the pixel values of other available reference blocks are filled to the unavailable reference block, ensuring that pixel prediction can still be performed based on neighboring blocks of the current block, and improving the accuracy of pixel prediction.

Certainly, to further improve the accuracy of pixel prediction, when the pixel values in available reference blocks are filled to the unavailable reference block, a pixel value of a pixel point that is nearest to the unavailable reference block and the current block among the available reference block may be acquired. It can be seen from arrangement of image blocks as shown in FIG. 1, the left side block, upper side block, and upper left block are all close to an upper left corner of the current image block. Therefore, a pixel value that is used for filling may be obtained from the pixel point that is nearest to the pixel point at the upper left corner of the current image block among the available reference blocks, and the pixel value that is used for filling is filled to the unavailable pixel block.

It should be pointed out that in the case where slices are divided according to a normal raster scan sequence, when one of the left side block and upper side block is unavailable, its upper left block is also unavailable. Therefore, the case where the upper left block and upper side block are available and the left side block is unavailable and the case where the upper left block and left side block are available and the upper side block is unavailable are unlikely to occur, and are not discussed herein.

As shown in FIG. 2, in actual applications, if the left side block A is available, and the upper side block B is unavailable, fill the pixel value of the left side block A to the upper side block B; if the upper side block B is available, and the left side block A is unavailable, fill the pixel value of the upper side block B to the left side block A; if the upper left block D is unavailable, and one of the left side block A and upper side block B is available, fill the pixel value of the available one of the left side block A and upper side block B to the upper left block; and if the upper left block D is unavailable, and both the left side block A and upper side block B are available, obtain an average value for the pixel values of the left side block A and upper side block B and fill it to the upper left block. To improve the accuracy of prediction, in the case of filling, the pixel value of the pixel point of the block among blocks A, B, and D may be selected, where the pixel point is nearest to the upper left corner of the current block, for example, the pixel value of the pixel point at the upper right corner of the left side block A, the pixel value of the pixel point at the lower left corner of the upper side block B, and the pixel value of the pixel point at the lower right corner of the upper left block D may be selected. As shown in FIG. 1 and FIG. 2, the prediction method according to this embodiment is also applicable to a UDI prediction method. After the prediction method according to this embodiment is used to fill the unavailable blocks among the upper left block, left side block, and upper side block of the current image block, the accuracy of UDI prediction may already be improved to a certain extent. For several prediction directions that point to the upper right block at the right side in UDI prediction, if the upper right block is unavailable, an invariable value or a pixel value that is nearest to the upper right corner may still be used for filling. However, to further improve the accuracy of prediction, an embodiment of the present invention further provides a prediction method, as shown in FIG. 4, including:

Step 201: Obtain a prediction direction.

The prediction direction is a prediction direction of a certain pixel point of the current image block. It can be learned according to the UDI technology that each pixel point of the current image block needs to perform pixel prediction according to pixel points of the reference blocks which 33 prediction directions point to.

Step 202: If the prediction direction points to an upper right block of the current image block, the upper right block is unavailable, and the left side block of the current image block is available, fill a pixel value of the left side block of the current image block to a lower side block of the current image block, and obtain a pixel value of the lower side block pointed to by the prediction direction in reverse extension after filling.

Step 203: Predict a pixel value of the current image block according to the pixel value of the lower side block pointed to by the prediction direction in reverse extension after filling and the prediction direction.

In this embodiment, the upper right block is actually also a reference block of the current image block. Therefore, the method for determining whether the upper right block is unavailable is the same as the method for determining whether a reference block is available according to the previous embodiment. The method includes: determining whether the upper right block is located outside a border of an image where the current image block is located; determining whether the upper right block is located at a different slice from the current image block; and determining whether the upper right block has not been encoded or decoded, if the upper right block meets any one of the conditions, the upper right block is unavailable.

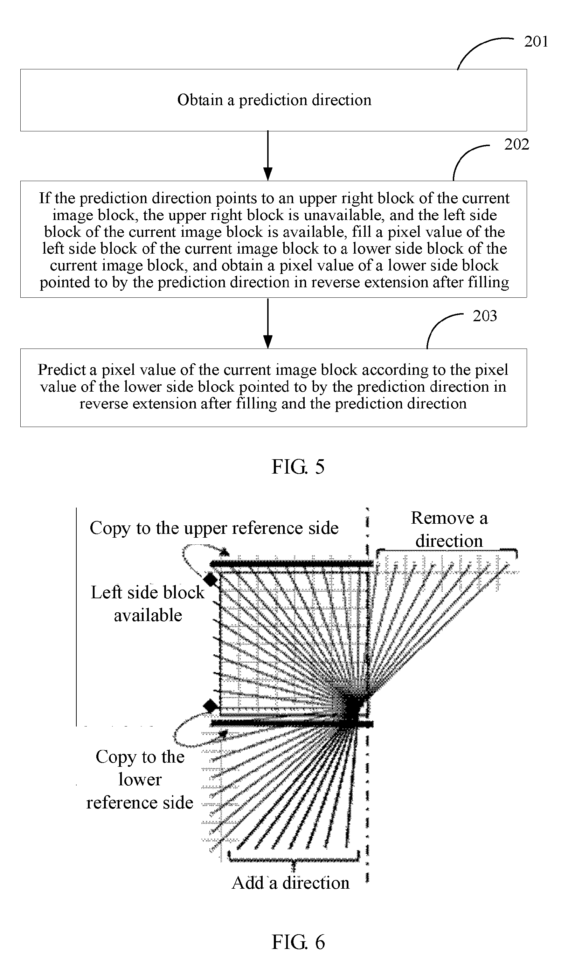

For the specific application, reference may be made to FIG. 5. When the UDI prediction method is used, the upper side block and left side block of the current image block may both use the prediction method according to the previous embodiment for prediction. For the unavailable upper right block, the direction is directly reversed, and prediction is performed according to the pixel value of pixel points that are adjacent to the current image block, are pointed to by the prediction direction after reversion, and are in the lower side block. Certainly, if the lower side block is unavailable, a pixel value of a pixel point of the corresponding lower side block may be filled according to a pixel value of the left side block.

According to the prediction method provided in this embodiment, when the upper right block pointed to by the prediction direction is unavailable, a pixel value of a pixel point of the lower side block pointed to reversely is acquired for prediction. Certainly, the lower side block is generally unavailable. In this case, the pixel value of the left side block is filled in the lower side block. In addition, the current image block is predicted according to the prediction direction and the pixel value after filling.

As shown in FIG. 6, an embodiment of the present invention further provides a predictor, configured to execute the prediction method provided in the previous embodiment, including:
an availability determining module 601, configured to obtain availability information about reference blocks of a current image block, and determine whether the reference blocks are available according to the availability information, where the reference blocks of the current image block include a left side block, an upper side block, and an upper left block of the current image block;
a pixel value filling module 602, configured to: if at least one of the reference blocks is available, and at least one is unavailable, fill a pixel value in the available reference block to the unavailable reference block as a reference pixel value of the current image block; and
a predicting module 603, configured to predict the current image block according to the reference pixel value.

In this embodiment, the availability information includes: whether a reference block is located inside a border of an image where the current image block is located; whether the reference block is located in a same slice with the current image block; and whether the reference block has already been encoded or decoded. If the reference block meets the three conditions, the reference block is available; otherwise, the reference block is unavailable. From another aspect, whether a reference block is located inside a border of an image where the current image block is located means to determine whether the reference block is an additionally supplemented image block that is located at the border of the image. The image specification for a encoding or decoding is 64×64. An image may fail to meet this specification requirement. In this case, certain virtual image blocks that do not exist will exist outside the border of the image. Apparently, these image blocks that do not exist cannot be used to predict a pixel value of the current image block.

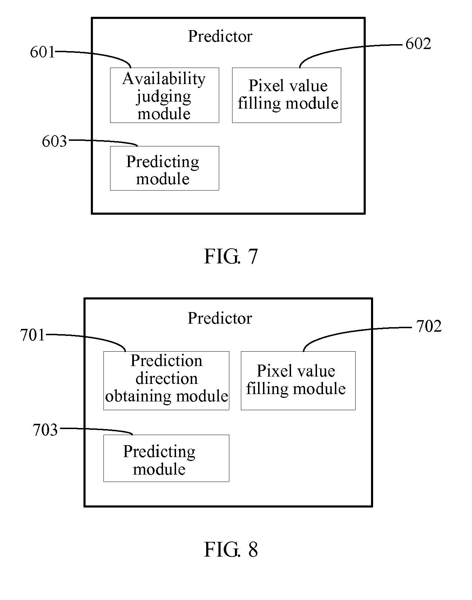

As shown in FIG. 7, relative to the UDI prediction technology, another embodiment of the present invention further provides a predictor, including:
a prediction direction obtaining module 701, configured to obtain a prediction direction;
a pixel value filling module 702, configured to: when the prediction direction points to an upper right block of the current image block, the upper right block is unavailable, and the left side block of the current image block is available, fill a pixel value of the left side block of the current image block to a lower side block of the current image block, and obtain a pixel value of the lower side block pointed to by the prediction direction in reverse extension after filling; and
a predicting module 703, configured to predict a pixel value of the current image block according to the pixel value of the lower side block pointed to by the prediction direction in reverse extension after filling and the prediction direction.

According to the description of the embodiments, persons skilled in the art can clearly understand that the present invention may be implemented by software in addition to a necessary universal hardware platform or by hardware only. In most circumstances, the former is preferred. Based on such understanding, the technical solutions in the present invention essentially, or the part contributing to the prior art may be embodied in a form of a software product. The computer software product is stored in a storage medium, such as a ROM/RAM, a magnetic disk, or an optical disk, and includes several instructions for instructing a computer device (which may be a personal computer, a server, a network device, and the like) to execute the methods described in all or some parts of the embodiments of the present invention.

The above are merely exemplary embodiments of the present invention. It should be noted that several improvements and modifications can also be made by persons of ordinary skill in the art within the principle of the present invention, and shall fall within the protection scope of the present invention.

## Claims

1. A prediction method in an image block encoding or decoding, comprising:
obtaining availability information about reference blocks of a current image block, and determining whether the reference blocks are available according to the availability information, wherein the reference blocks of the current image block comprise a left side block, an upper side block, and an upper left block of the current image block;
if at least one of the reference blocks is available, and at least one is unavailable, filling a pixel value in the available reference block to the unavailable reference block as a reference pixel value of the current image block; and
predicting the current image block according to the reference pixel value.

2. The prediction method according to claim 1, wherein the availability information comprises: whether a reference block is located inside a border of an image where the current image block is located; whether the reference block is located in a same slice with the current image block; and whether the reference block has already been encoded or decoded.

3. The prediction method according to claim 2, wherein the determining whether the reference block is available according to the availability information comprises:
determining whether the reference block is located inside a border of an image where the current image block is located;
determining whether the reference block is located in a same slice with the current image block; and
determining whether the reference block has already been encoded or decoded,
if the reference block is located inside the border of the image where the current image block is located, is located in the same slice with the current image block, and has already been encoded or decoded, the reference block is available; otherwise, the reference block is unavailable.

4. The prediction method according to claim 1, wherein the if at least one of the reference blocks is available, and at least one is unavailable, filling a pixel value in the available reference block to the unavailable reference block as a reference pixel value of the current image block comprises:
if the left side block is available, and the upper side block is unavailable, filling the pixel value of the left side block to the upper side block;
if the upper side block is available, and the left side block is unavailable, filling the pixel value of the upper side block to the left side block;
if the upper left block is unavailable, and one of the left side block and upper side block is available, filling the pixel value of the available one of the left side block and upper side block to the upper left block; and
if the upper left block is unavailable, and both the left side block and upper side block are available, obtaining an average value for the pixel values of the left side block and upper side block and filling it to the upper left block.

5. The prediction method according to claim 4, wherein the obtaining an average value for the pixel values of the left side block and upper side block and filling it to the upper left block comprises:
obtaining an average value of the pixel values of pixel points in the left side block and upper side block that are nearest to a pixel point at an upper left corner of the current image block; and
filling the average value to a lower right corner of the upper left block.

6. The prediction method according to claims 1 to 4, wherein the filling a pixel value in the available reference block to the unavailable reference block comprises:
obtaining a pixel value used for filling from pixel points in the available reference block that are nearest to a pixel point at an upper left corner of the current image block; and
filling the pixel value used for filling to the unavailable reference block.

7. A prediction method in a encoding or decoding, comprising:
obtaining a prediction direction;
if the prediction direction points to an upper right block of a current image block, the upper right block is unavailable, and a left side block of the current image block is available, filling a pixel value of the left side block of the current image block to a lower side block of the current image block, and obtaining a pixel value of the lower side block pointed to by the prediction direction in reverse extension after filling; and
predicting a pixel value of the current image block according to the pixel value of the lower side block pointed to by the prediction direction in reverse extension after filling and the prediction direction.

8. The prediction method according to claim 7, wherein when the upper right block meets any one of the following conditions, the upper right block is unavailable:
the upper right block is located outside a border of an image where the current image block is located;
the upper right block is located at a different slice from the current image block; and
the upper right block has not been encoded or decoded.

9. A predictor used in a encoding or decoding, comprising:
an availability determining module, configured to obtain availability information about reference blocks of a current image block, and determine whether the reference blocks are available according to the availability information, wherein the reference blocks of the current image block comprise a left side block, an upper side block, and an upper left block of the current image block;
a pixel value filling module, configured to: if at least one of the reference blocks is available, and at least one is unavailable, fill a pixel value in the available reference block to the unavailable reference block as a reference pixel value of the current image block; and
a predicting module, configured to predict the current image block according to the reference pixel value.

10. The predictor according to claim 9, wherein the availability information comprises:
whether a reference block is located inside a border of an image where the current image block is located; whether the reference block is located in a same slice with the current image block; and
whether the reference block has already been encoded or decoded.

11. The predictor according to claim 10, wherein the determining whether the reference block is available according to the availability information comprises:
determining whether the reference block is located inside a border of an image where the current image block is located;
determining whether the reference block is located in a same slice with the current image block; and
determining whether the reference block has already been encoded or decoded,
if the reference block is located inside the border of the image where the current image block is located, is located in the same slice with the current image block, and has already been encoded or decoded, the reference block is available; otherwise, the reference block is unavailable.

12. The predictor according to claim 9, wherein the if at least one of the reference blocks is available, and at least one is unavailable, filling a pixel value in the available reference block to the unavailable reference block as a reference pixel value of the current image block comprises:
if the left side block is available, and the upper side block is unavailable, filling the pixel value of the left side block to the upper side block;
if the upper side block is available, and the left side block is unavailable, filling the pixel value of the upper side block to the left side block;
if the upper left block is unavailable, and one of the left side block and upper side block is available, filling the pixel value of the available one of the left side block and upper side block to the upper left block;
if the upper left block is unavailable, and both the left side block and upper side block are available, obtaining an average value for the pixel values of the left side block and upper side block and filling it to the upper left block.

13. The predictor according to claim 4 wherein the obtaining an average value for the pixel values of the left side block and upper side block and filling it to the upper left block comprises:
obtaining an average value of the pixel values of pixel points in the left side block and upper side block that are nearest to a position of a pixel point at an upper left corner of the current image block; and
filling the average value to a lower right corner of the upper left block.

14. The prediction method according to claims 1 to 4, wherein the filling a pixel value in the available reference block to the unavailable reference block comprises:
obtaining a pixel value used for filling from pixel points in the available reference block that are nearest to a pixel point at an upper left corner of the current image block; and
filling the pixel value used for filling to the unavailable reference block.

15. A predictor in a encoding or decoding, comprising:
a prediction direction obtaining module, configured to obtain a prediction direction;
a pixel value filling module, configured to: when the prediction direction points to an upper right block of a current image block, the upper right block is unavailable, and a left side block of the current image block is available, fill a pixel value of the left side block of the current image block to a lower side block of the current image block, and obtain a pixel value of the lower side block pointed to by the prediction direction in reverse extension after filling; and
a predicting module, configured to predict a pixel value of the current image block according to the pixel value of the lower side block pointed to by the prediction direction in reverse extension after filling and the prediction direction.

16. The predictor according to claim 15, wherein when the upper right block meets any one of the following conditions, the upper right block is unavailable:
the upper right block is located outside a border of an image where the current image block is located;
the upper right block is located at a different slice from the current image block; and
the upper right block has not been encoded or decoded.
